(19) Europäisches Patentamt / European Patent Office / Office européen des brevets

(11) **EP 2 049 771 B1**

(12) **EUROPÄISCHE PATENTSCHRIFT**

(45) Veröffentlichungstag und Bekanntmachung des Hinweises auf die Patenterteilung:
**18.01.2017   Patentblatt 2017/03**

(21) Anmeldenummer: **07801544.3**

(22) Anmeldetag: **08.08.2007**

(51) Int Cl.:
*F01D 17/04* (2006.01)     *F02B 37/00* (2006.01)
*F04D 29/02* (2006.01)

(86) Internationale Anmeldenummer:
**PCT/EP2007/006993**

(87) Internationale Veröffentlichungsnummer:
**WO 2008/017462 (14.02.2008 Gazette 2008/07)**

(54) **ABGASTURBOLADER FÜR EINE BRENNKRAFTMASCHINE UND BRENNKRAFTMASCHINE**

EXHAUST-GAS TURBOCHARGER FOR AN INTERNAL COMBUSTION ENGINE AND INTERNAL COMBUSTION ENGINE

TURBOCOMPRESSEUR POUR UN MOTEUR À COMBUSTION INTERNE, ET MOTEUR À COMBUSTION INTERNE

(84) Benannte Vertragsstaaten:
**DE FR GB IT**

(30) Priorität: **11.08.2006   DE 102006037575**

(43) Veröffentlichungstag der Anmeldung:
**22.04.2009   Patentblatt 2009/17**

(73) Patentinhaber: **DaimlerChrysler AG
70327 Stuttgart (DE)**

(72) Erfinder:
• **SCHMID, Wolfram
72622 Nürtingen (DE)**
• **SUMSER, Siegfried
70327 Stuttgart (DE)**

(74) Vertreter: **JENSEN & SON
366-368 Old Street
London EC1V 9LT (GB)**

(56) Entgegenhaltungen:
WO-A-2004/101969     DE-A1- 4 226 799
DE-A1- 4 338 475     US-A- 5 431 752

**Beschreibung**

Die Erfindung betrifft einen Abgasturbolader für eine Brennkraftmaschine gemäß dem Oberbegriff des Anspruchs 1 sowie eine Brennkraftmaschine gemäß dem Oberbegriff des Anspruchs 6.

Aus der Druckschrift DE 602 05 588 T2 geht ein Abgasturbolader für eine Brennkraftmaschine hervor, welcher ein Gehäuse und ein Laufzeug umfasst, wobei das Laufzeug ein Verdichterrad aufweist. Das Verdichterrad ist aus einem titanhaltigen Werkstoff hergestellt. Der Werkstoff Titan weist bekanntlich eine hohe Festigkeit bei einer relativ niedrigen Dichte auf. Jedoch ist ein Verdichterrad aus titanhaltigem Werkstoff schwierig zu bearbeiten und die Produktionskosten im allgemein üblichen Fräsverfahren sind hoch.

Die Druckschrift WO 2004/101969 A2 offenbart einen Abgasturbolader für eine Brennkraftmaschine, mit einem Gehäuse und einem Laufzeug, wobei das Gehäuse einen durchströmbaren Luftführungsabschnitt, einen durchströmbaren Abgasführungsabschnitt und einen Lagerabschnitt aufweist. Das Laufzeug umfasst ein Verdichterrad zum Ansaugen und Verdichten von Luft, ein Turbinenrad zur Expansion von Abgas und eine im Lagerabschnitt gelagerte Welle zur drehfesten Verbindung des Verdichterrades mit dem Turbinenrad. Das Verdichterrad ist im Luftführungsabschnitt und das Turbinenrad ist im Abgasführungsabschnitt jeweils drehbar positioniert. Um einen gesteigerten Wirkungsgrad und eine verbessertes Ansprechverhalten zu erreichen wird ein Verdichterrad mit einem vergrößerten Anströmwinkel vorgeschlagen, wobei dann ein geschmiedetes Verdichterrad aus Aluminium oder Titan eingesetzt wird.

Der Erfindung liegt die Aufgabe zugrunde, einen Abgasturbolader bereitzustellen, mit Hilfe dessen hohe Ladebrücke realisierbar sind. Der Erfindung liegt ferner die Aufgabe zugrunde, eine Brennkraftmaschine mit einem verbesserten Beschleunigungsverhalten bereitzustellen.

Die Aufgabe wird erfindungsgemäß durch einen Abgasturbolader mit den Merkmalen des Anspruchs 1 gelöst. Der erfindungsgemäße Abgasturbolader weist ein Verhältnis M einer ersten Masse mVer eines Verdichterrades und einer zweiten Masse mTur eines Turbinenrades auf, welches der Funktion $M = \dfrac{mVer}{mTur}$ folgt, wobei das Verhältnis M in folgendem Wertebereich liegt: 0,8 < M < 1,2.

Vorteilhafterweise sind bei dem im angegebenen Wertebereich liegenden Verhältnis M hohe Ladedrücke oberhalb eines Druckverhältnisses von 4,5 realisierbar.

In einer Ausgestaltung nach Anspruch 2 ist das Verdichterrad aus einem ersten Werkstoff mit einer ersten Dichte D1 herdestellt, wobei die erste Dichte in folgendem Wertebereich liegt: 7 kg/dm³ < D1 < 9 kg/dm³. Unter Berücksichtigung gleicher Dimensionierung, weist das Verdichterrad, welches aus dem ersten Werkstoff hergestellt ist, eine größere Masse mVer auf, als ein Verdichterrad, das aus einem Werkstoff hergestellt ist, dessen Dichte unterhalb des angegebenen Wertebereichs liegt. Der Vorteil dieser größeren ersten Masse mVer liegt in ihrer höheren Kapazität zur Speicherung von Rotationsenergie. Damit ist es möglich, eine bestimmte hohe Abgasturboladerdrehzahl über einen längeren Zeitraum zu erhalten, wie es beispielsweise im Bereich einer drehzahlstationären Abgasturboaufladung angestrebt wird. Der Abgasturbolader weist ein verbessertes Beschleunigungsverhalten auf, da die Abgasturboladerdrehzahl beim Senken der Last der Brennkraftmaschine besonders langsam abfällt. Insbesondere Brennkraftmaschinen mit einem Hubvolumen kleiner als 2 dm³, profitieren von dem verbessertem Beschleunigungsverhalten. Werkstoffe mit höherer Dichte weisen häufig auch bessere Festigkeitseigenschaften auf, so dass sich beides auf einfache und kostengünstige Weise kombinieren lässt.

In einer weiteren Ausgestaltung nach Anspruch 3 entspricht ein zweiter Werkstoff, aus dem das Turbinenrad hergestellt ist, dem ersten Werkstoff. Der Vorteil dieser Ausgestaltung liegt in einer zusätzlichen Kapazität zur Speicherung der Rotationsenergie. Weiterhin bietet diese Ausgestaltung die Möglichkeit, rotationsfähige Teile des Abgasturboladers, nämlich das Verdichterrad, das Turbinenrad und eine das Verdichterrad mit dem Turbinenrad drehfest verbindende Welle, einstückig auszubilden.

In einer weiteren Ausgestaltung nach Anspruch 4 ist in einem Zuströmkanal des Abgasführungsabschnitts ein Leitapparat zur veränderlichen Einstellung eines wirksamen Turbinenquerschnitts positioniert, mit Hilfe dessen eine Steigerung der Abgasturboladerdrehzahl herbeiführbar ist.

In einer weiteren Ausgestaltung nach Anspruch 5 ist ein Einströmkanal des Luftführungsabschnitts mit einer Leitvorrichtung zur Änderung einer Verdichterradanströmung ausgestattet. Mit Hilfe der Leitvorrichtung ist ein Betrieb des Verdichterrades in einem so genannten Kaltluft-Turbinenbetrieb möglich. Im Kaltluft-Turbinenbetrieb kann bei niedrigen Drehzahlen des Abgasturboladers in den Luftführungsabschnitt einströmende Verbrennungsluft zur Steigerung der Abgasturboladerdrehzahl nutzbar gemacht werden.

Die Aufgabe wird ferner gelöst durch eine Brennkraftmaschine mit den Merkmalen des Anspruchs 6. Die erfindungsgemäße Brennkraftmaschine weist ein Hubvolumen auf, welches der Funktion $VH = \dfrac{\pi}{2} \cdot DZ^2 \cdot RZ$ folgt, wobei das Hubvolumen größer als 7 dm³ oder kleiner als 2 dm³ ist. Insbesondere die Brennkraftmaschine mit einem Hubvolumen, welches kleiner als 2 dm³ ist, weist durch die Fähigkeit des Abgasturboladers einen hohen Ladedruck zu erzeugen ein verbessertes Beschleunigungsverhalten auf.

Weitere Vorteile und zweckmäßige Ausführungen der Erfindung sind der Beschreibung und den Zeichnungen zu entnehmen.

Dabei zeigen:

Fig. 1 in einer Schnittdarstellung einen erfindungsgemäßen Abgasturbolader,

Fig. 2 in einem Balkendiagramm einen Einsatzbereich eines ersten Werkstoffes mit einer ersten Dichte als Funktion eines Verhältnisses und eines Hubvolumens,

Fig. 3 in einer Draufsicht ein Verdichterrad aus Stahlguß mit einer Beschaufelung in einer ersten Variante und

Fig. 4 in einer Draufsicht das Verdichterrad aus Stahlguß mit einer Beschaufelung in einer zweiten Variante.

In den Figuren sind alle gleichen oder gleich wirkenden Bauteile mit denselben Bezugszeichen versehen.

Eine Brennkraftmaschine, die bevorzugt als Dieselmotor ausgeführt ist, weist ein Maschinengehäuse mit einem Zylinderkopf und einem Kurbelgehäuse auf. Im Kurbelgehäuse sind Zylinder mit einem jeweiligen Durchmesser DZ angeordnet, wobei jedem Zylinder ein translatorisch bewegbarer Kolben zugeordnet ist. Des Weiteren ist im Kurbelgehäuse eine gekröpfte Kurbelwelle um eine Drehachse drehbar gelagert. Die Kurbelwelle weist Kurbelzapfen auf, die mit einem radialen Abstand RZ von der Drehachse angeordnet sind. Jeder Kolben ist mit Hilfe eines Pleuels mit einem Kurbelzapfen der Kurbelwelle verbunden, so dass relevante Kolbenkräfte auf die Kurbelwelle übertragbar sind und in eine Drehbewegung der Kurbelwelle umgesetzt werden können. Eine rotatorische Bewegung der Kurbelwelle von 180°KW entspricht einer translatorischen Bewegung des Kolbens in der Größe des doppelten radialen Abstands RZ, wobei der doppelte radiale Abstand RZ einem so genannten Hub entspricht. Die Brennkraftmaschine weist in Abhängigkeit des Zylinderdurchmessers DZ und des Hubs ein Hubvolumen VH auf, welches der Funktion

$$VH = \frac{\pi}{2} \cdot DZ^2 \cdot RZ \text{ folgt.}$$

Der Brennkraftmaschine ist ein Frischluftstrang und ein Abgastrakt zugeordnet.

In den Zylindern der Brennkraftmaschine sind Brennräume zur Verbrennung eines Kraftstoff-Luftgemisches ausgebildet. Jeder Brennraum ist von einer Innenwandung eines Zylinders, von dem im Zylinder bewegbaren Kolben sowie von einer Wandung des Zylinderkopfes begrenzt, wobei die Wandung des Zylinderkopfes und der jeweilige Kolben in etwa gegenüberliegend angeordnet sind. Die Brennräume sind mit Hilfe der entsprechenden Kolben in ihren Volumina veränderbar gestaltet, so dass darin ein an sich bekannter Verbrennungsprozeß durchgeführt werden kann.

Der Zylinderkopf umfasst ein Einlasssystem mit Einlasskanälen und Einlassventilen, ein Auslasssystem mit Auslasskanälen und Auslassventilen sowie ein Einspritzsystem zum Einspritzen von Kraftstoff in den zugehörigen Brennraum, wobei der Kraftstoff mit Hilfe einer Kraftstoffpumpe aus einem Kraftstofftank förderbar ist. Jeder Einlasskanal weist in bevorzugter Weise wenigstens ein Einlassventil auf, mit Hilfe dessen der Einlasskanal zu öffnen beziehungsweise zu schließen ist, wobei das Einlassventil an einem dem Brennraum zugewandten Ende des Einlasskanals angeordnet ist. Über den Einlasskanal ist dem Brennraum bei geöffnetem Einlassventil Verbrennungsluft oder ein Kraftstoff-Verbrennungsluftgemisch zuführbar. Ein vom Brennraum abgewandtes Ende des Einlasskanals ist mit einem Sammelbehälter verbunden, welcher dem Frischluftstrang zugeordnet ist und einer Strömungsberuhigung dient.

Jeder Auslasskanal weist bevorzugt wenigstens ein Auslassventil auf, mit Hilfe dessen der Auslasskanal zu öffnen beziehungsweise zu schließen ist, wobei das Auslassventil an einem Ende des Auslasskanals angeordnet ist, welches dem Brennraum zugewandt ist. Bei einer Verbrennung von im Brennraum gebildetem Kraftstoff-Verbrennungsluftgemisch entsteht im Betrieb der Brennkraftmaschine Abgas, welches über den Auslasskanal aus dem Brennraum in den Abgastrakt strömen kann.

Der Frischluftstrang weist eine Ladeluftleitung auf, wobei an einem Ende der Ladeluftleitung, welches der Brennkraftmaschine zugewandt ist, der Sammelbehälter angeordnet ist. Stromauf des Sammelbehälters ist in der Ladeluftleitung ein Ladeluftkühler zur Kühlung der angesaugten Verbrennungsluft positioniert. Ein Verbrennungsluftfilter zum Reinigen der angesaugten Verbrennungsluft ist an dem anderen Ende der Ladeluftleitung angeordnet, welches von der Brennkraftmaschine abgewandt positioniert ist.

Der Abgastrakt umfasst einen Abgaskrümmer sowie eine Abgasleitung, wobei der Abgaskrümmer Abgaskanäle und einen die Abgaskanäle zusammenführenden Sammelkanal aufweist. Der Abgaskrümmer ist stromab des Auslasssystems angeordnet, wobei je ein Abgaskanal einem Auslasskanal zugeordnet ist. Die Abgasleitung ist an einer Öffnung des Sammelkanals mit dem Abgaskrümmer verbunden, wobei die Öffnung stromab der Abgaskanäle positioniert ist. An einem von der Brennkraftmaschine abgewandten Ende der Abgasleitung ist zur Abgasnachbehandlung ein Abgasnachbehandlungssystem angeordnet, wobei das Abgasnachbehandlungssystem in Form eines Rußfilters und/oder Katalysators ausgebildet ist.

Die Brennkraftmaschine weist ergänzend ein Abgasrückführsystem auf, wobei zwischen dem Abgaskrümmer und dem Sammelbehälter eine Verbindungsleitung in Form einer Abgasrückführleitung angeordnet ist. In der Abgasrückführleitung ist zur Kühlung von rückgeführtem Abgas ein Abgasrückführkühler angeordnet. Eine Einstellung einer rückgeführten Abgasmenge erfolgt mit Hilfe eines Abgasrückführventils.

Zur Regelung und Steuerung vieler Funktionen ist der Brennkraftmaschine ein Regelungs- und/oder Steuerungssystem zugeordnet. Über das Regelungs- und/oder Steuerungssystem sind insbesondere die Kraftstoffzufuhr und das Abgasrückführventil regelbar.

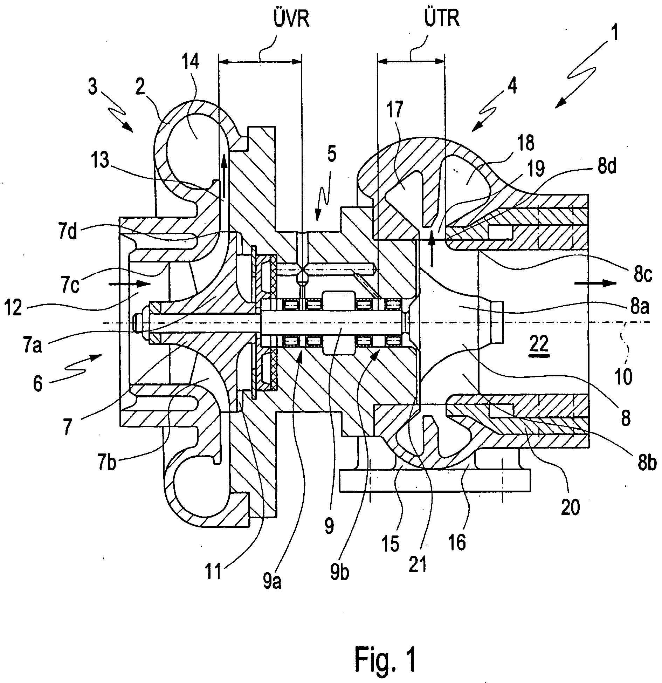

Der Brennkraftmaschine ist ein in Fig. 1 dargestellter Abgasturbolader 1 zugeordnet, welcher ein Gehäuse 2 aufweist, das einen durchströmbaren Luftführungsabschnitt 3, einen durchströmbaren Abgasführungsabschnitt 4 und einen Lagerabschnitt 5 umfasst. Der Luftführungsabschnitt 3 ist im Frischluftstrang zwischen dem Sammelbehälter und dem Ladeluftkühler positioniert. Der Abgasführungsabschnitt 4 ist im Abgasstrang stromauf des Abgasnachbehandlungssystems angeordnet.

Weiterhin weist der Abgasturbolader 1 ein Laufzeug 6 auf, welches ein Verdichterrad 7 mit einer ersten Masse mVer zum Ansaugen und Verdichten von Verbrennungsluft, ein Turbinenrad 8 mit einer zweiten Masse mTur zur Expansion von Abgas sowie eine das Verdichterrad mit dem Turbinenrad drehfest verbindende Welle 9 mit einer zweiten Drehachse 10 umfasst. Die Welle 9 ist im Lagerabschnitt 5 mit Hilfe einer ersten Lagervorrichtung 9a und einer zweiten Lagervorrichtung 9b drehbar gelagert, wobei die erste Lagervorrichtung und die zweite Lagervorrichtung bevorzugt jeweils in Form eines Gleitlagers ausgebildet sind.

Das Verdichterrad 7 weist eine erste Nabe 7a und eine Mehrzahl auf der ersten Nabe fixierter erster Schaufeln 7b mit je einer ersten Schaufeleintrittskante 7c und einer ersten Schaufelaustrittskante 7d auf. Der Aufbau des Turbinenrades 8 entspricht prinzipiell dem Aufbau des Verdichterrades. So weist das Turbinenrad 8 eine zweite Nabe 8a und eine Mehrzahl auf der zweiten Nabe fixierter zweiter Schaufeln 8b mit je einer zweiten Schaufeleintrittskante 8c und einer zweiten Schaufelaustrittskante 8d auf.

Das Verdichterrad 7 ist im Luftführungsabschnitt 3 in einer ersten Radkammer 11 drehbar positioniert. Stromauf der ersten Radkammer 11 ist ein Einströmkanal 12 im Luftführungsabschnitt 3 angeordnet, wobei der Einströmkanal 12 und das Verdichterrad 7 bevorzugt koaxial angeordnet sind. Der Einströmkanal 12 dient zur Konditionierung der vom Verdichterrad 7 angesaugten Verbrennungsluft.

Stromab der ersten Radkammer 11 ist im Luftführungsabschnitt 3 ein Abströmkanal 13 in Form eines Diffusors ausgebildet, welcher zur Konditionierung der vom Verdichterrad 7 angesaugten und verdichteten Verbrennungsluft ausgelegt ist. Dem Abströmkanal 13 ist an seinem von der ersten Radkammer 11 abgewandten Ende ein zum Luftführungsabschnitt 3 gehöriger erster Spiralkanal 14 angeschlossen, welcher zur Bereitstellung einer rotationssymmetrischen Strömung dient. Des Weiteren ist der erste Spiralkanal 14 als Verbindungskanal zwischen dem Abströmkanal 13 und einem im Luftführungsabschnitt 3 ausgebildeten Austrittskanal ausgeführt.

Der Abgasführungsabschnitt 4 ist zweiflutig ausgestaltet und weist eine erste Flut 15 und eine zweite Flut 16 auf. Die erste Flut 15 beziehungsweise die zweite Flut 16 dient zur Konditionierung des Abgases, welches im Betrieb der Brennkraftmaschine das Turbinenrad 8 in eine rotierende Bewegung versetzt. Vorzugsweise sind die erste Flut 15 und die zweite Flut 16 senkrecht zur zweiten Drehachse 10 angeordnet.

Im Abgasführungsabschnitt 4 ist der ersten Flut 15 ein zweiter Spiralkanal 17 beziehungsweise der zweiten Flut 16 ein dritter Spiralkanal 18 zugeordnet. Der zweite Spiralkanal 17 und der dritte Spiralkanal 18 dienen zur Bereitstellung einer rotationssymmetrischen Strömung. Des Weiteren sind der zweite Spiralkanal 17 und der dritte Spiralkanal 18 jeweils als Verbindungskanal zwischen der erste Flut 15 beziehungsweise der zweiten Flut 16 und einem Zuströmkanal 19 des Abgasführungsabschnitts 4 ausgebildet. Zur einstellbaren, betriebspunktabhängigen Konditionierung des Abgases ist im Zuströmkanal 19 ein Leitapparat 20 positioniert, welcher verstellbar ausgebildet ist.

Stromab des Zuströmkanals 19 ist eine zweite Radkammer 21 im Abgasführungsabschnitt 4 angeordnet, wobei in der zweiten Radkammer 21 das Turbinenrad 8 positioniert ist. Ein Austrittskanal 22, welcher stromab der zweiten Radkammer 21 im Abgasführungsabschnitt 4 angeordnet ist, und das Turbinenrad 8 sind vorzugsweise koaxial angeordnet.

Im Betrieb der Brennkraftmaschine wird das Turbinenrad 8 als Folge einer Beaufschlagung durch das Abgas der Brennkraftmaschine in eine Rotationsbewegung versetzt, wobei mit Hilfe der Welle 9 das Verdichterrad 7 ebenfalls in Rotation versetzt wird, so dass es Verbrennungsluft ansaugt und verdichtet. Zur Erzielung eines hohen Ladedruckes insbesondere im mittleren und oberen Drehzahlbereich der Brennkraftmaschine sind das Verdichterrad 7 und das Turbinenrad 8 bevorzugt so ausgebildet, dass ein Verhältnis M der ersten Masse mVer zur zweiten Masse mTur in einem Wertebereich $0{,}8 < M < 1{,}2$ liegt. In einer weiteren Ausführungsform des Abgasturboladers 1 weist das Verhältnis M ein Wert M=1,1 auf. Zur verbrauchsgünstigen Auslegung des Abgasturboladers 1 entspricht die erste Masse mVer der zweiten Masse mTur, so dass das Verhältnis M einen Wert M=1 aufweist. In einer weiteren Ausführungsform des Abgasturboladers 1 weist das Verhältnis M ein Wert M=0,9 auf.

Die erste Lagervorrichtung 9a weist eine erste Biegebelastung auf, welche aus der ersten Masse mVer und einem ersten Abstand ÜVR resultiert, wobei der erste Abstand ÜVR zwischen einer Mitte der Lagervorrichtung 9a und einem der ersten Lagervorrichtung 9a abgewandten äußersten Punkt der ersten Schaufelaustrittskante 7d ausgebildet ist. Die zweite Lagervorrichtung 9b weist eine entsprechende zweite Biegebelastung auf, wobei die zweite Biegebelastung aus der zweiten Masse mTur und einem zweiten Abstand ÜTR resultiert, welcher zwischen einer Mitte der Lagervorrichtung 9b und einem der zweiten Lagervorrichtung 9b abgewandten äußersten Punkt der zweiten Schaufeleintrittskante 8c ausgebildet ist. Bei annähernd gleichen Massen von Verdichterrad und Turbinenrad sind die erste Biegebelastung und die zweite Biegebelastung annähernd gleich groß, so dass der erste Abstand ÜVR und der zweite Abstand ÜTR annähernd gleich groß zu gestalten und die Lagervorrichtungen 9a, 9b gleich groß zu dimensionieren sind, wie in Fig. 1 dargestellt ist.

Um eine bestimmte Abgasturboladerdrehzahl auch bei niedrigen Lasten und niedrigen Drehzahlen der Brennkraftmaschine trotz eines unter diesen Bedingungen herrschenden geringen Abgasgegendrucks am Turbinenrad auf einem hohen Drehzahlniveau zu halten, ist eine hohe Kapazität zur Speicherung von Rotationsenergie vorteilhaft. Das Verdichterrad 7 ist aus einem ersten Werkstoff W1 hergestellt, dessen ersten Dichte D1 in folgendem Wertebereich liegt: $7\ kg/dm^3 < D1 < 9\ kg/dm^3$. Das Turbinenrad 8 ist ferner bevorzugt aus einem Werkstoff W2 hergestellt, der dem Werkstoff W1 entspricht, und weist somit in etwa eine ähnlich große Kapazität zur Speicherung von Rotationsenergie auf wie das Verdichterrad.

Der genannte Wertebereich entspricht einem Wertebereich des Werkstoffs Stahl. Der Werkstoff Stahl zeichnet sich dadurch aus, dass sich eine hohe Festigkeit des Verdichterrades 7 bei kostengünstiger Herstellung, z. B. bei einer Herstellung in einem Gießverfahren, erzielen lässt. Die hohe Festigkeit des Verdichterrades 7 ist insbesondere bei hohem Ladedruck, welcher sich in einem Bereich zwischen 4,5 bar und 6 bar bewegt, und hier insbesondere bei einem Hubvolumen VH, welches größer als $7\ dm^3$ ist, notwendig. Insbesondere geeignet als erster Werkstoff W1, ist ein unter dem Handelsname Inconel bekannter Turbinenradwerkstoff.

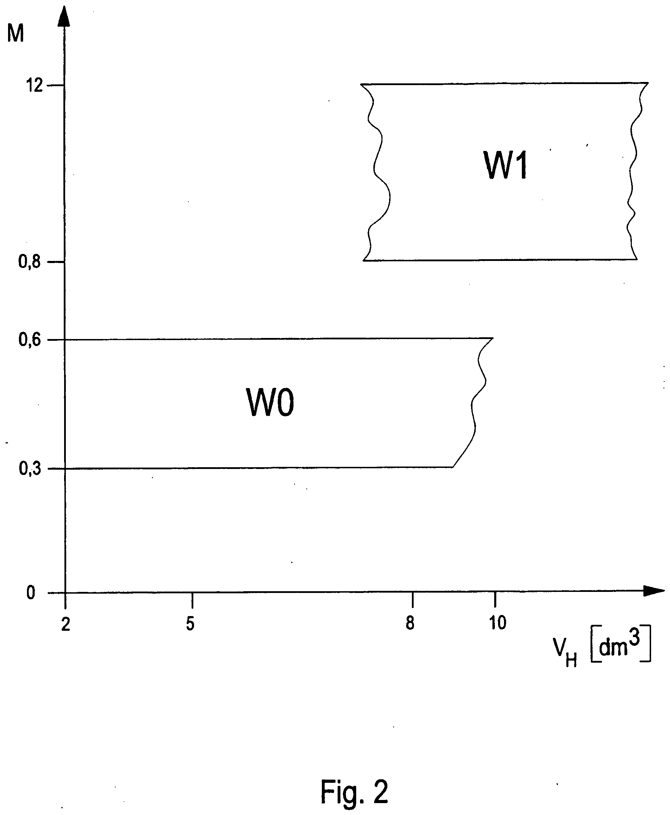

In Fig. 2 ist in Form eines Balkendiagramms der Einsatzbereich des ersten Werkstoffes W1, welcher die erste Dichte D1 im angegebenen Wertebereich aufweist, im Vergleich zu einem üblicherweise eingesetzten Werkstoff WO dargestellt. Der Werkstoff WO weist eine Dichte DO auf, die kleiner ist als $7\ kg/dm^3$. Mit Hilfe des Balkendiagramms ist ersichtlich, dass üblicherweise in einem Hubvolumenbereich von $2\ dm^3$ bis $8\ dm^3$ der Einsatz des Werkstoffes WO erfolgt, wobei die Dichte DO im Allgemeinen in einem Wertebereich zwischen $2\ kg/dm^3$ und $7\ kg/dm^3$ liegt.

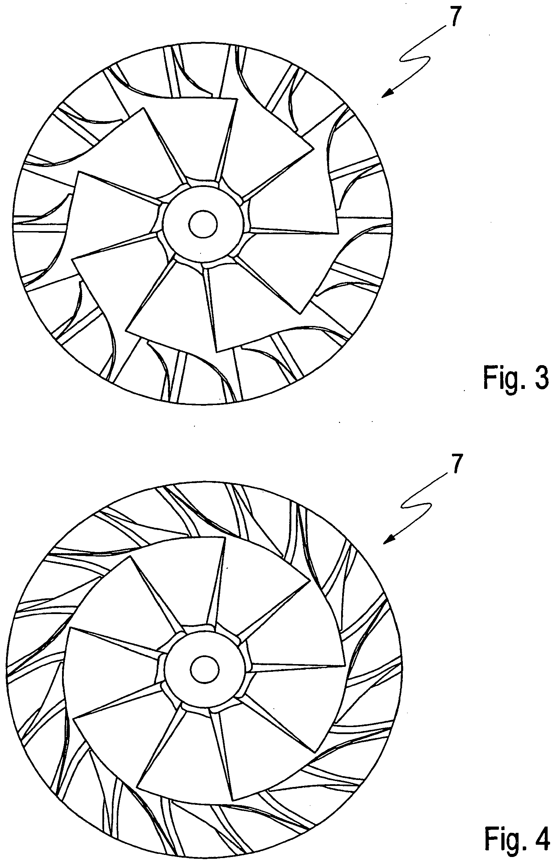

In den Fig. 3 und 4 ist jeweils in einer Draufsicht je eine Ausführungsform des Verdichterrades 7 dargestellt, die sich dadurch auszeichnet, dass insbesondere eine anspruchsvolle Gestaltung der ersten Schaufeln 7b realisiert ist, wobei das Verdichterrad aus Stahl im Gießverfahren hergestellt ist. Die Fig. 3 zeigt das Verdichterrad 7 mit einer rückwärts gekrümmten Beschaufelung. In Fig. 4 ist das Verdichterrad 7 mit einer radial endenden Beschaufelung dargestellt.

## Patentansprüche

1. Abgasturbolader für eine Brennkraftmaschine, mit einem Gehäuse (2) und einem Laufzeug (6), wobei das Gehäuse (2) einen durchströmbaren Luftführungsabschnitt (3), einen durchströmbaren Abgasführungsabschnitt (4) und einen Lagerabschnitt (5) aufweist, und das Laufzeug (6) ein Verdichterrad (7) zum Ansaugen und Verdichten von Luft, ein Turbinenrad (8) zur Expansion von Abgas und eine im Lagerabschnitt (5) gelagerte Welle (9) zur drehfesten Verbindung des Verdichterrades (7) mit dem Turbinenrad (8) umfasst, wobei das Verdichterrad (7) im Luftführungsabschnitt (3) und das Turbinenrad (8) im Abgasführungsabschnitt (4) jeweils drehbar positioniert ist,
**dadurch gekennzeichnet, dass**
ein Verhältnis (M) einer ersten Masse (mVer) des Verdichterrades (7) und einer zweiten Masse (mTur) des Turbinenrades (8) der Funktion

$$M = \frac{mVer}{mTur}$$

folgt, wobei das Verhältnis (M) in folgendem Wertebereich liegt:

$$0{,}8 < M < 1{,}2 .$$

2. Abgasturbolader nach Anspruch 1,
**dadurch gekennzeichnet, dass** das Verdichterrad (7) aus einem ersten Werkstoff (W1) mit einer ersten Dichte (D1) hergestellt ist, wobei die erste Dichte (D1) in folgendem Wertebereich liegt: $7\ kg/dm^3 < D1 < 9\ kg/dm^3$.

3. Abgasturbolader nach Anspruch 1 oder 2,
**dadurch gekennzeichnet, dass**
ein zweiter Werkstoff (W2), aus welchem das Turbinenrad (8) hergestellt ist, dem ersten Werkstoff (W1) entspricht.

4. Abgasturbolader nach einem der Ansprüche 1 bis 3,
**dadurch gekennzeichnet, dass**
in einem Zuströmkanal (19) des Abgasführungsabschnitts (4) ein Leitapparat (20) zur veränderlichen Einstellung eines wirksamen Turbinenquerschnitts positioniert ist.

5. Abgasturbolader nach einem der Ansprüche 1 bis 4,
**dadurch gekennzeichnet, dass**
ein Einströmkanal (12) des Luftführungsabschnitts (3) mit einer Leitvorrichtung zur Änderung einer Verdichterradanströmung ausgestattet ist.

6. Brennkraftmaschine mit einem Abgasturbolader nach einem der Ansprüche 1 bis 5, mit einem Kurbelgehäuse und mindestens einem im Kurbelgehäuse positionierten Zylinder, welcher einen Durchmesser (DZ) aufweist, und einer Kurbelwelle, welche im Kurbelgehäuse drehbar gelagert ist, wobei die Kurbelwelle eine Drehachse und einen Kurbelzapfen aufweist, und der Kurbelzapfen mit einem radialen Abstand (RZ) von der Drehachse angeordnet ist, **dadurch gekennzeichnet, dass** ein Hubvolumen (VH) der Brennkraftmaschine der Funktion

$$VH = \frac{\pi}{2} \cdot DZ^2 \cdot RZ$$

folgt, wobei das Hubvolumen (VH) größer als 7 dm$^3$ oder kleiner als 2 dm$^3$ ist.

## Claims

1. Exhaust gas turbocharger for an internal combustion engine, having a housing (2) and a rotor assembly (6), wherein the housing (2) has an air guide portion (3), through which there can be a flow, an exhaust gas guide portion (4), through which there can be a flow, and a bearing portion (5), and the rotor assembly (6) comprises a compressor wheel (7) for drawing in and compressing air, a turbine wheel (8) for expansion of exhaust gas and a shaft (9) mounted in the bearing portion (5) for rotationally fixing the compressor wheel (7) to the turbine wheel (8), wherein the compressor wheel (7) is rotationally supported in the air guide portion (3) and the turbine wheel (8) is rotationally supported in the exhaust gas guide portion (4), **characterised in that** a ratio (M) of a first mass (mVer) of the compressor wheel (7) and a second mass (mTur) of the turbine wheel (8) follows the function

$$M = \frac{mVer}{mTur}$$

wherein the ratio (M) lies in the following value range:

$$0.8 < M < 1.2$$

2. Exhaust gas turbocharger according to claim 1, **characterised in that**

the compressor wheel (7) is produced from a first material (W1) with a first density (D1), wherein the first density (D1) lies in the following value range:

$$7 \ kg/dm^3 < D1 < 9 \ kg/dm^3.$$

3. Exhaust gas turbocharger according to claim 1 or 2, **characterised in that** a second material (W2), from which the turbine wheel (8) is produced, corresponds to the first material (W1).

4. Exhaust gas turbocharger according to one of claims 1 to 3, **characterised in that** a guide vane unit (20) is positioned in an inflow duct (19) of the exhaust gas guide portion (4) for variable adjustment of an effective turbine cross-section.

5. Exhaust gas turbocharger according to one of claims 1 to 4, **characterised in that** an inflow duct (12) of the air guide portion (3) is equipped with a guide vane unit for changing a compressor wheel inflow.

6. Internal combustion engine, having an exhaust gas turbocharger according to one of claims 1 to 5, having a crankcase and at least one cylinder positioned in the crankcase, wherein the cylinder has a diameter (DZ), and having a crankshaft which is rotationally mounted in the crankcase, wherein the crankshaft has an axis of rotation and a crankpin, and the crankpin is arranged at a radial distance (RZ) from the axis of rotation, **characterised in that** a stroke volume (VH) of the internal combustion engine follows the function

$$VH = \frac{\pi}{2} \cdot DZ^2 \cdot RZ$$

wherein the stroke volume (VH) is greater than 7 dm$^3$ or less than 2 dm$^3$.

## Revendications

1. Turbocompresseur à gaz d'échappement pour un moteur à combustion interne, comprenant un carter (2) et un rotor complet (6), le carter (2) présentant une section (3) de conduite d'air pouvant être parcourue, une section de conduite de gaz d'échappement (4) pouvant être parcourue et une section de stockage (5) et le rotor complet (6) comprend une roue de compresseur (7) destinée à aspirer et à comprimer l'air, une roue de turbine (8) destinée à dilater les gaz d'échappement et un arbre (9) monté dans la section de stockage (5) destiné à relier en rotation la roue de compresseur (7) à la roue de turbine (8), la roue de turbine (7) dans la section de conduite d'air (3) et la roue de turbine (8) dans la section de conduite de gaz d'échappement (4) étant respectivement positionnées en rotation, **caractérisé en ce qu'**un rapport (M) d'une première masse (mVer) de la roue de compresseur (7) et une seconde masse (mTur) de la roue du compresseur (8) suive la fonction

$$M = \frac{mVer}{mTur}$$

, le rapport (M) se trouvant dans la zone de valeur suivante :

$$0,8 < M < 1,2$$

2. Turbocompresseur à gaz d'échappement selon la revendication 1, **caractérisé en ce que** la roue de compresseur (7) est fabriquée à partir d'un premier matériau (WI) ayant une première épaisseur (D1), la première épaisseur (D1) se trouvant dans la zone de valeur suivante :

$$7 \text{ kg/dm}^3 < D1 < 9 \text{ kg/dm}^3.$$

3. Turbocompresseur selon la revendication 1 ou la revendication 2, **caractérisé en ce qu'**un second matériau (W2), dans lequel est fabriqué la roue de turbine (8), correspond au premier matériau (W1).

4. Turbocompresseur selon l'une quelconque des revendications 1 à 3, **caractérisé en ce que** dans un canal d'admission (19) de la section de conduite de gaz d'échappement (4) est disposé un distributeur (20) destiné à réaliser un réglage variable d'une section transversale de turbine active.

5. Turbocompresseur selon l'une quelconque des revendications 1 à 4, **caractérisé en ce qu'**un canal d'admission (12) de la section de conduite d'air (3) est équipé d'un distributeur destiné à modifier un écoulement de roue de compresseur.

6. Moteur à combustion interne comprenant un turbocompresseur selon l'une quelconque des revendications 1 à 5, comprenant un carter de moteur et au moins un cylindre positionné dans le carter moteur, lequel présente un diamètre (DZ), et un vilebrequin, qui est monté en rotation dans le carter de moteur, le vilebrequin présentant un axe de rotation et un maneton de vilebrequin, et le maneton de vilebrequin est disposé à une distance radiale (RZ) de l'axe de rotation, **caractérisé en ce qu'**un volume de levée (VH) du moteur à combustion interne suit la fonction

$$VH = \frac{\pi}{2} DZ^2 \cdot RZ$$

, le volume de levée (VH) étant supérieur à 7 dm$^3$ ou inférieur à 2 dm$^3$.

Fig. 1

EP 2 049 771 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60205588 T2

- WO 2004101969 A2